# EUROPÄISCHE PATENTSCHRIFT

(11) **EP 2 718 564 B1**
(45) Veröffentlichungstag und Bekanntmachung des Hinweises auf die Patenterteilung: **08.03.2017**
(21) Anmeldenummer: 12727300.1
(22) Anmeldetag: 01.06.2012
(51) Int. Cl.: F03D 80/00, F03D 1/06

(54) **ROTORBLATT EINER WINDENERGIEANLAGE UND WINDENERGIEANLAGE**
ROTOR BLADE OF A WIND TURBINE, AND WIND TURBINE
PALE DE ROTOR D'UNE ÉOLIENNE ET ÉOLIENNE

(30) Priorität: 10.06.2011 DE 102011077402
(43) Veröffentlichungstag der Anmeldung: 16.04.2014
(73) Patentinhaber: Senvion GmbH, 22297 Hamburg (DE)
(72) Erfinder: BENDEL, Urs, 24787 Fockbek (DE); FUGLSANG-PETERSEN, Jochen, 24613 Aukrug (DE); OBERENDER, Karl-Hermann, 16230 Britz (DE)
(74) Vertreter: Seemann & Partner Patentanwälte mbB
(86) Internationale Anmeldenummer: PCT/EP2012/002327
(87) Internationale Veröffentlichungsnummer: WO 2012/167891

(56) Entgegenhaltungen:
- EP-A2- 2 182 202
- WO-A2-2009/156243
- CN-A- 101 654 211
- DE-A1-102004 057 979
- DE-A1-102006 055 091
- DE-A1-102009 035 248
- DE-U1-202007 008 066

## Beschreibung

Die Erfindung betrifft ein Rotorblatt einer Windenergieanlage mit einer Rotorblattschale und einer Blattwurzel zur Befestigung des Rotorblatts an einer Nabe einer Windenergieanlage, wobei das Rotorblatt wenigstens einen Hohlraum aufweist, der zumindest abschnittsweise begehbar ist.

Die Erfindung betrifft weiterhin eine Windenergieanlage mit einem Mast, einer Gondel, einer an der Gondel angeordneten Nabe sowie wenigstens einem an der Nabe angeordneten Rotorblatt.

Bei der Nutzung der Windenergie durch Windenergieanlagen besteht seit jeher das Bestreben, Anlagen mit möglichst großer Nennleistung zu entwickeln. Da die Nennleistung solcher Anlagen im Wesentlichen von der durch den Rotor überstrichenen Fläche bestimmt ist, wurden mit laufender Entwicklung die Anlagen immer größer, wobei heute Spitzenanlagen Rotordurchmesser von weit über 100m aufweisen, was eine Rotorblattlänge von über 50m bedingt.

Rotorblätter dieser Größe lassen sich schon aus Kosten- und Gewichtsgründen nicht mehr aus Vollmaterial herstellen. Sie sind daher in der Regel aus einer inneren Tragstruktur aufgebaut, welche mit einer die aerodynamischen Eigenschaften vorgebenden Außenhaut versehen sind. Während diese Außenhaut bei kleineren Rotorblättern oft komplett mit Füllmaterial, z.B. Hartschaum, ausgefüllt ist, weisen größere Rotorblätter Hohlräume auf.

Ein solches Rotorblatt und eine damit ausgestattete Windenergieanlage sind z.B. in der WO 2007/131937 A1 beschrieben. Um die Montage der einzelnen Teile des Rotorblatts zu ermöglichen, ist der Hohlraum im Inneren der dort beschriebenen Rotorblätter zumindest abschnittsweise begehbar ausgeführt.

Da Rotorblätter für eine einwandfreie Funktion eine geschlossene Außenhülle aufweisen müssen, ist der Zugang zu begehbaren Hohlräumen zumeist in der Blattwurzel angeordnet, mit welcher das Rotorblatt mit der Nabe verbunden wird.

Hierzu sei auf die DE 10 2006 055 091 A1 der Anmelderin verwiesen, in der ein Schott einer Windenergieanlage gezeigt ist, das in oder an der Blattwurzel eines Rotorblatts oder im Bereich zwischen der Blattwurzel eines Rotorblatts und einer Rotornabe angeordnet ist oder wird. Das Schott hat wenigstens zwei Durchsteige- bzw. Durchstiegsöffnungen, damit das Wartungspersonal in das Rotorblatt gelangen kann.

Der durch die Rotorblattschale umgebene Hohlraum des Rotorblatts wird beispielsweise aus dem Grund von Wartungspersonal betreten, um eine Inspektion des Rotorblatts von innen vorzunehmen, um beispielsweise Verbindungen im Rotorblatt, wie z.B. Stegverbindungen zu einem oder mehreren Gurten der Rotorblattschalen oder die Verklebung von Rotorblattschalenteilen wie die der Saugseite mit der Druckseite der Rotorblattschale, überprüfen zu können.

DE 10 2004 057 979 A1 offenbart ein Rotorblatt für eine Windenergieanlage mit einer Laminat aufweisenden Rotorblattschale. Es ist eine feuchtigkeitsabweisende Schutzschicht vorgesehen.

DE 20 2007 008 066 U1 offenbart eine Vorrichtung zur Ausrichtung eines winkelverstellbaren Rotorblatts einer Windenergieanlage sowie eine entsprechende Windenergieanlage. Das Rotorblatt ist von innen begehbar, damit Wartungspersonal Messungen durchführen kann.

WO 2009/156243 A2 offenbart eine Rotornabe, bei der Öffnungen verschließbar sind.

DE 10 2009 035 248 A1 offenbart ein Gehäuse für eine Windturbine, wobei ein Gehäuseelement mit einer äußeren Oberfläche und einer inneren Oberfläche eine Öffnung aufweist, um in das Innere des Gehäuses zu gelangen.

EP 2 182 202 A2 offenbart ein Verfahren, um aus einer Windenergieanlage einen Antrieb zu entfernen.

CN 101 654 211 A offenbart ein portables Kransystem für Servicearbeiten an einer Windkraftanlage.

Es ist Aufgabe der vorliegenden Erfindung, das Eintreten bzw. das Verlassen des Hohlraumes eines Rotorblatts einer Windenergieanlage zu vereinfachen.

Diese Aufgabe wird erfindungsgemäß durch ein Rotorblatt einer Windenergieanlage gelöst, das die Merkmale des Anspruchs 1 aufweist.

Gelöst wird diese Aufgabe somit durch ein Rotorblatt einer Windenergieanlage mit einer Rotorblattschale und einer Rotorblattwurzel zur Befestigung des Rotorblatts an einer Nabe der Windenergieanlage, wobei das Rotorblatt einen Hohlraum aufweist, der zumindest abschnittsweise begehbar ist, wobei die Rotorblattschale eine verschließbare Ausstiegsöffnung aufweist, wobei der Hohlraum in mehrere Teilräume unterteilt ist, welche durch passierbare Durchstiegsöffnungen verbunden sind.

Durch Vorsehen einer verschließbaren Ausstiegsöffnung können zum einen beispielsweise Werkzeuge einfach in ein Rotorblatt befördert werden oder das Rotorblatt kann einfach be- oder entlüftet werden. Das Rotorblatt ist vorzugsweise eines, das bei einer Windenergieanlage mit einer horizontalen Drehachse des Rotors verwendet wird.

Ungeachtet der Abmessungen gattungsgemäßer Rotorblätter ist der zur Verfügung stehende Bewegungsspielraum insbesondere im Bereich der Zugangsöffnung begrenzt, was insbesondere dazu führt, dass eine aufgrund eines Arbeitsunfalls oder einer plötzlichen Erkrankung in ihrer Bewegung eingeschränkte Person aus dem Hohlraum im Inneren des Rotorblatts nur schwer geborgen werden kann. Dies gilt umso mehr, da die Bergung bei Rotorblättern des Standes der Technik nur durch die enge Zugangsöffnung in der Blattwurzel erfolgen kann. Hier schafft die Erfindung Abhilfe. Durch eine verschließbare Ausstiegsöffnung in der Rotorblattschale ist es möglich, eine zu bergende Person ohne den Weg durch die Blattwurzel direkt ins Freie zu befördern.

Es wird somit erfindungsgemäß außer einem Zugang von der Blattwurzel bzw. der Nabe einer Windenergieanlage aus in den Hohlraum des Rotorblatts, der von der Rotorblattschale umgeben ist, auch ein Zugang bzw. ein Ausstieg durch eine Ausstiegsöffnung in der Rotorblattschale ermöglicht. Die Rotorblattschale weist hierbei üblicherweise ein Profil auf und umfasst eine Saugseite sowie eine Druckseite. Es kann sowohl auf der Saugseite als auch auf der Druckseite eine Ausstiegsöffnung vorgesehen sein oder sogar auf beiden Seiten der Rotorblattschale, um nicht möglicherweise ein Verschwenken des Rotorblatts um eine Längsachse, also ein Pitchen, durchführen zu müssen, damit eine verletzte Person beispielsweise abgeseilt werden kann. Wenn beispielsweise in Fahnenstellung eine verschließbare Ausstiegsöffnung beispielsweise dann auf der unten liegenden Saugseite vorgesehen ist, ist eine einfache und direkte Bergung nach unten möglich. Hierbei steht das Rotorblatt dann üblicherweise im Wesentlichen waagerecht mit der Rotorblattnase in Richtung Wind.

Wenn zum Verschließen der Ausstiegsöffnung eine bündig mit der Außenhaut der Rotorblattschale abschließende Luke vorgesehen ist, werden die aerodynamischen Eigenschaften des Rotorblatts bei geschlossener Luke nicht beeinträchtigt.

Wenn die Luke mit einer nach innen gerichteten Schwenkbewegung öffnend ausgeführt ist, kann die Luke besonders einfach von innen geöffnet und geschlossen werden. Hierbei wird besonders effizient verhindert, dass die Außenhaut des Rotorblatts bzw. der Rotorblattschale beschädigt wird. Zudem kann so auch eine sichere Fixierung der Luke im Rotorblatt vorgesehen sein.

Wenn alternativ dazu die Luke mit einer nach außen gerichteten Schwenkbewegung öffnend ausgeführt ist, wird durch die geöffnete Luke der Bewegungsspielraum von die Bergung unterstützenden Personen möglichst wenig eingeschränkt. Gleichzeitig wird zum Öffnen der Luke besonders wenig Kraft benötigt, so dass dies ggf. auch durch eine verletzte oder erkrankte Person bewältigt werden kann.

Um ein versehentliches Öffnen der Luke und eine damit verbundene Absturzgefahr zu vermeiden, ist in einer bevorzugten Weiterbildung der Erfindung wenigstens eine Sicherungseinrichtung gegen unbeabsichtigtes Öffnen der Luke vorgesehen. Diese kann vorzugsweise wenigstens einen Sperrriegel umfassen.

Um bei nach außen öffnender Luke eine Absturzgefahr für eine auf der Luke stehende Person auszuschließen, ist die Sicherungseinrichtung bevorzugt so weitergebildet, dass die Sicherungseinrichtung bei innen gegen die Luke wirkender Last das Öffnen der Luke verhindernd ausgeführt ist. Dadurch wird bei nach außen wirkender Last, z.B. durch eine ganz oder teilweise auf der Luke stehenden Person, ein Öffnen der Luke verhindert.

Vorzugsweise ist im Bereich der verschließbaren Ausstiegsöffnung die Rotorblattschale verstärkt und/oder ein die Rotorblattschale verstärkendes Element vorgesehen. Hierdurch wird die durch die Ausstiegsöffnung erzeugte Schwächung der Rotorblattschale insgesamt wenigstens kompensiert.

Vorzugsweise ist die Ausstiegsöffnung in einem Bereich des Rotorblatts angeordnet, der zwischen der maximalen Rotorblatttiefe und der Rotorblattspitze liegt. Wenn dieses Merkmal gegeben ist, ist die Ausstiegsöffnung in einem Bereich des Rotorblatts angeordnet, in dem die Belastungen in der Rotorblattschale geringer sind als in einem Bereich näher zur Rotorblattwurzel. Die Ausstiegsöffnung ist vorzugsweise entfernt von tragenden Elementen des Rotorblatts vorgesehen, beispielsweise außerhalb eines Bereichs, in dem ein Gurt vorgesehen ist.

Wenn vorzugsweise wenigstens eine, insbesondere verschließbare, Öffnung, insbesondere Durchstiegsöffnung, in wenigstens einem Steg des Rotorblatts vorgesehen ist, kann zum einen eine gute Durchlüftung vorgesehen sein und zum anderen, für den Fall, dass es sich hierbei um eine Durchstiegsöffnung handelt, auch ein Durchstieg durch den Steg bzw. ein Durchgang durch einen Steg oder mehrere Stege ermöglicht sein. Hierdurch kann eine Wartungsperson Zugang zu verschiedenen Bereichen im Rotorblatt haben und so eine umfangreiche Inspektion sehr zeitextensiv durchführen.

Die Öffnung, insbesondere Durchstiegsöffnung, wird vorzugsweise im Bereich der neutralen Fasern eines oder mehrerer Stege vorgesehen, um so die Stabilität der Stege möglichst nicht zu beeinflussen.

Vorzugsweise ist ein Randbereich der Luke in Schließrichtung der Luke sich verjüngend ausgebildet. Hierdurch kann ein Herausfallen bzw. ungewolltes Öffnen der Luke verhindert werden. Insbesondere bei einer nach Innen sich öffnenden Luke ist dann wenigstens eine Kontaktfläche der Luke zu dem Randbereich der Ausstiegsöffnung, d.h. der Rotorblattschale, rampenförmig bzw. gefast ausgebildet, so dass die wenigstens eine Kontaktfläche in Rampenform oder als Fase mit einer Kante der Rotorblattschale in Kontakt tritt bzw. auf dieser aufliegt und sich so nicht ungewollt nach außen öffnen kann. Die wenigstens eine rampenförmige oder gefaste Kontaktfläche ist vorzugsweise gegenüberliegend von einem Scharnier, mittels dem die Luke verschwenkbar geöffnet werden kann.

Vorzugsweise ist die Außenkontur der Luke an die Kontur der Außenhaut der Rotorblattschale angepasst. Insbesondere ist damit gemeint, dass auch die Außenkontur der Luke an die Wölbung der Außenhaut der Rotorblattschale angepasst ist, so dass das Außenprofil bzw. die Kontur der Außenhaut der Rotorblattschale kontinuierlich ineinander übergehend ist.

Bei Arbeiten im Inneren eines gattungsgemäßen Rotorblattes befindet sich das Rotorblatt in der Regel in einer waagerechten Drehstellung, so dass sich Wartungspersonal relativ sicher bewegen kann. Wenn allerdings während der Arbeiten der Rotor zu trudeln beginnt, besteht für das Personal die Gefahr, in Richtung der Blattspitze abzurutschen. Um auch in diesem äußerst unwahrscheinlichen Fall die Sicherheit von Wartungspersonal zu gewährleisten, sind bevorzugt im Inneren des Hohlraumes Anschlagmittel zum Befestigen einer persönlichen Schutzausrüstung vorgesehen. Die Anschlagmittel sind hierbei bevorzugt an der Innenseite der Rotorblattschalen angebracht und insbesondere bevorzugt an einer Verstärkung der Rotorblattschale. Die Verstärkung kann hierbei beispielsweise durch weitere Laminatlagen erfolgen. Wenn die Anschlagmittel besonders bevorzugt im Bereich der Ausstiegsöffnung angeordnet sind, können diese zusätzlich genutzt werden, um Personen während eines Bergungsvorgangs vor einem Absturz zu sichern.

Die Pitch-Stellung eines gattungsgemäßen Rotorblatts ist während notwendiger Wartungsarbeiten in der Regel in Fahnenstellung, was bedeutet, dass das Rotorblatt auch bei anströmendem Wind keinen Vortrieb entwickelt. Andernfalls würde die Gefahr des Trudelns unnötig erhöht. Bei geöffneter Ausstiegsöffnung kann jedoch der Wind so in den inneren Hohlraum des Rotorblatts eingreifen, dass ein um die Längsachse des Rotorblatts wirkendes Drehmoment entsteht und das Rotorblatt somit aus der neutralen in eine aktive Pitch-Position gedreht wird, wodurch die Gefahr des Trudelns wiederum ansteigt. Um dem entgegenzuwirken, ist gemäß einer bevorzugten Weiterbildung der Erfindung vorgesehen, dass die Rotorblattschale zusätzlich zur Ausstiegsöffnung wenigstens eine weitere, insbesondere verschließbare, Öffnung aufweist, wobei beispielsweise auch eine weitere Ausstiegsöffnung vorgesehen sein kann, welche es ermöglicht, dass die Luftströmung aus dem Hohlraum leeseitig austreten kann.

Bei sehr großen Rotorblättern können im inneren Hohlraum Querstege notwendig sein, um die im Betrieb wirkenden Kräfte aufzunehmen und abzuleiten oder um Luftströmungen im Rotorblatt beispielsweise zur Enteisung des Rotorblatts zu steuern. Um die Formstabilität des Rotorblatts zu gewährleisten, können sich die Querstege über den ganzen Querschnitt des Rotorblatts erstrecken und somit den Hohlraum in mehrere Teilräume unterteilen. Zudem können die längsaxial angeordneten Stege auch zu relativ großräumigen Abtrennungen des Hohlraums führen, die insbesondere effiziente Wartungsarbeiten verhindern. Für diesen Fall ist es erfindungsgemäß vorgesehen, den Hohlraum in mehrere Teilräume zu unterteilen, die durch passierbare Durchstiegsöffnungen verbunden sind.

Die Aufgabe wird weiterhin erfindungsgemäß durch eine Windenergieanlage gelöst, wobei die Windenergieanlage einen Mast, eine Gondel, eine an der Gondel angeordnete Nabe, sowie wenigstens ein an der Nabe angeordnetes Rotorblatt aufweist, wobei das wenigstens eine Rotorblatt erfindungsgemäß wie vorstehend beschrieben ausgebildet ist.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Aufgabe wird ferner durch ein Rotorblatt einer Windenergieanlage mit einer Rotorblattschale und einer Blattwurzel zur Befestigung des Rotorblatts an einer Nabe der Windenergieanlage gelöst, wobei das Rotorblatt wenigstens einen Hohlraum aufweist, der zumindest abschnittsweise begehbar ist, wobei die Rotorblattschale in einem vorgebbaren Bereich eine Markierung aufweist, die als Markierung einer Ausstiegsöffnung vorgesehen ist. Hierbei kann die Ausstiegsöffnung durch Trennen der Rotorblattschale in diesem Bereich bzw. an der Markierung vorgesehen sein. Das Trennen in diesem Bereich kann insbesondere ein Sägen und/oder Schneiden und/oder Bohren bzw. Perforieren sein.

Der vorgebbare Bereich ist vorzugsweise in dem Hohlraum, insbesondere in einem begehbaren Bereich des Hohlraums, angeordnet.

Der vorgebbare Bereich ist vorzugsweise ein Bereich der Rotorblattschale, der vergleichsweise wenig zur Stabilität des Rotorblatts beiträgt. Insbesondere ist der vorgebbare Bereich entfernt von einem Gurt des Rotorblatts. Vorzugsweise ist der vorgebbare Bereich von der Rotorblattnase aus gesehen hinter einem Steg, insbesondere hinter der maximalen Dicke des Rotorblatts oder des entsprechenden Profils angeordnet. Vorzugsweise ist der vorgebbare Bereich zwischen der Mitte der Rotorblatttiefe und der Rotorblatthinterkante angeordnet.

Die Markierung ist vorzugsweise auf der Innenseite der Rotorblattschale und/oder auf der Außenseite der Rotorblattschale angeordnet. Die Markierung kann durch eine Einfärbung vorgesehen sein.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine Windenergieanlage in einer schematischen Frontansicht,
- Fig. 2: eine schematische dreidimensionale Darstellung eines Teils eines erfindungsgemäßen Rotorblatts,
- Fig. 3: ein schematischer Ausbruch aus einem erfindungsgemäßen Rotorblatt,
- Fig.4: eine schematische Darstellung einer Luke mit einer Sicherungseinrichtung,
- Fig. 5: eine schematische Darstellung einer weiteren Luke und
- Fig. 6: eine schematische Darstellung eines Querschnitts durch ein erfindungsgemäßes Rotorblatt.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

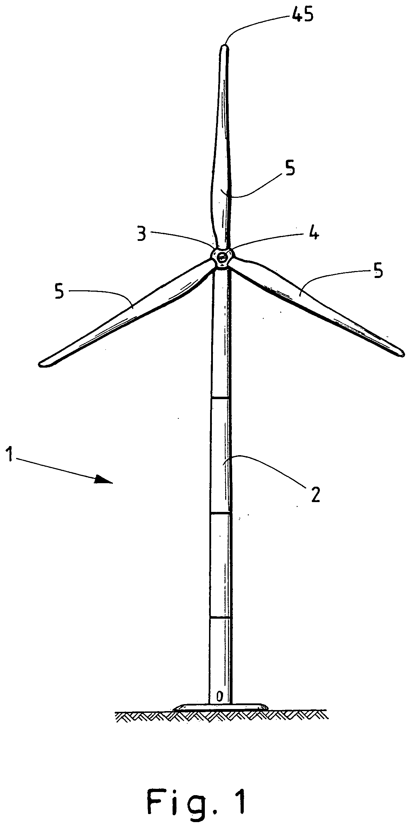

Fig. 1 zeigt eine Windenergieanlage 1 mit einem Turm 2 und einer Gondel 3. An der windzugewandten Seite der Gondel 3 befindet sich eine Nabe 4, an welcher drei Rotorblätter 5 angeordnet sind.

Solche Windenergieanlagen werden inzwischen mit großen Nennleistungen angeboten und weisen daher sehr große Abmessungen auf. Beispielsweise erreicht das Modell M6 der Anmelderin eine Nennleistung von über 6 MW und weist einen Rotordurchmesser von 126m auf, was einer Rotorblattlänge von 63m entspricht.

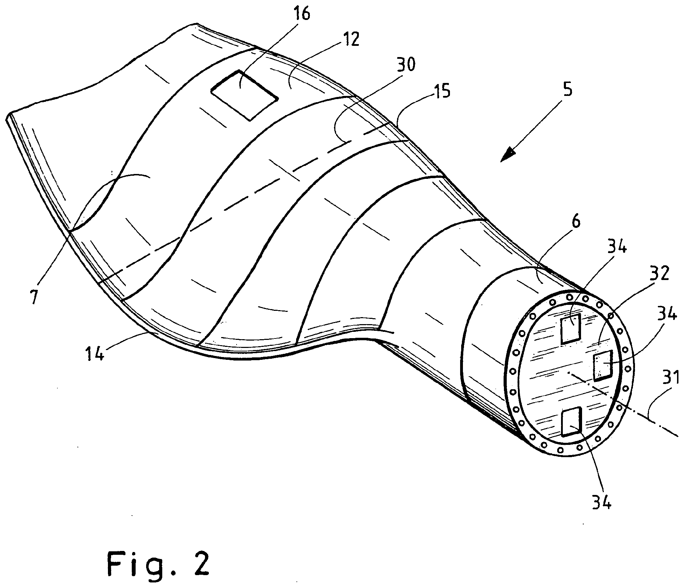

Ein einzelnes Rotorblatt 5 der Windenergieanlage 1 ist in Fig. 2 dargestellt. Es weist eine Blattwurzel 6 zur Befestigung an der Nabe 4 auf und eine Rotorblattschale 7, die im Betrieb vom Wind umströmt wird und durch seine spezielle aerodynamische Form den Vortrieb für den aus den Rotorblättern 5 gebildeten Rotor liefert.

Das schematisch in Fig. 2 dargestellte Rotorblatt 5 ist, wie zu erkennen ist, nur teilweise dargestellt, d.h. der Bereich zur Spitze des Rotorblatts hin fehlt. Es ist zudem eine Nase 15 und eine Hinterkante 14 dargestellt. Das Rotorblatt 5 selbst kann über die Rotorblattwurzel 6 und dort durch Durchstiegsöffnungen 34 des Schotts 32 betreten werden. Es sind entsprechend mehrere Durchstiegsöffnungen 34 vorgesehen, um in verschiedenen Drehstellungen bzw. bei verschiedenen Pitchwinkeln, d.h. Winkelstellungen des Rotorblatts 5 relativ zur Drehachse 31, bequem das Rotorblatt 5 bzw. den Hohlraum im Rotorblatt 5 betreten zu können. In der Stellung der Fig. 2 würde das Rotorblatt 5 beispielsweise gut durch die unten angeordnete Durchstiegsöffnung 34 betreten werden können. In dieser Darstellung ist in der Rotorblattschale 6 bzw. der Außenhaut des Rotorblatts 5 eine Luke 16 dargestellt, die, wenn diese geöffnet ist, eine Ausstiegsöffnung 13 darstellen würde. Sinnvollerweise ist dann das Rotorblatt 5 allerdings um 180° gedreht, so dass die Luke 16 nicht im oberen Bereich des Rotorblatts 5 angeordnet ist, sondern unten liegend, so dass dann nach unten beispielsweise eine verletzte Person abgeseilt werden kann.

Es ist vorzugsweise auch eine weitere Luke 16 und damit eine weitere Ausstiegsöffnung vorgesehen, nämlich auf der in Fig. 2 verdeckten Seite des Rotorblatts 5, beispielsweise gegenüberliegend der Luke 16. Wenn die Luke 16 beispielsweise auf der Saugseite des Rotorblatts 5 angeordnet ist, könnte eine weitere Luke 16 auf der Druckseite angeordnet sein.

Vorzugsweise ist die Ausstiegsöffnung oder sind die Ausstiegsöffnungen 13 zwischen der Rotorblattspitze 45 und einem Bereich angeordnet, in dem die größte Rotorblatttiefe 30 vorliegt. Bei der Rotorblatttiefe 30 handelt es sich um eine Sehne von der Blattspitze 15 zur Blatthinterkante 14. In dem Bereich von der Rotorblattwurzel bis zu einer maximalen Rotorblatttiefe herrschen die größten Kräfte im Rotorblatt vor. Damit wären die Ausstiegsöffnungen in einem Bereich angebracht, in dem weniger Kräfte herrschen, so dass eine Öffnung in der Außenhaut 12 bzw. der Rotorblattschale 7 weniger problematisch ist.

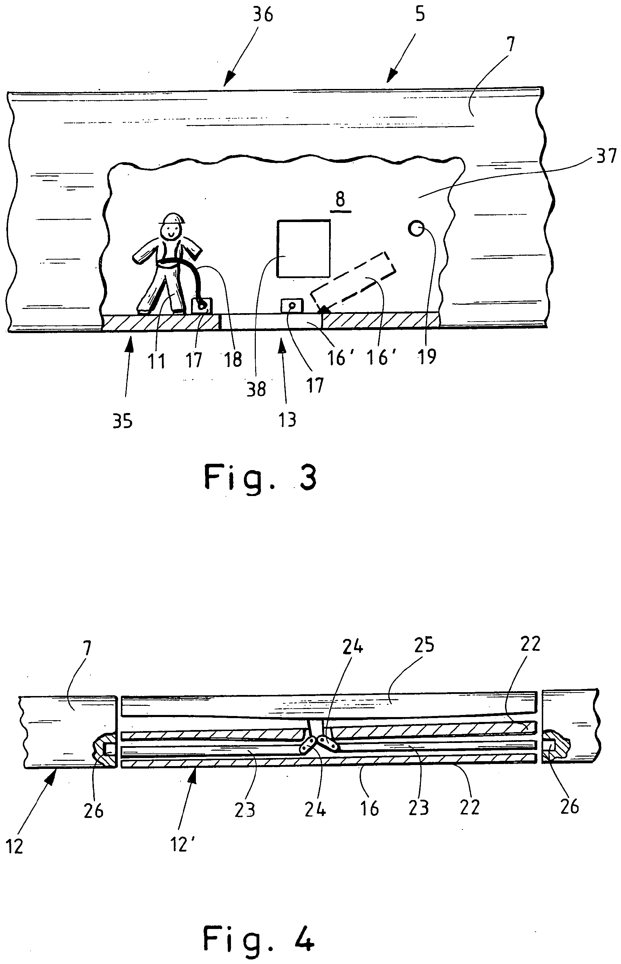

Fig. 3 zeigt einen schematischen Ausbruch aus dem erfindungsgemäßen Rotorblatt 5. Das Rotorblatt 5 weist einen Hohlraum 8 auf. Es ist erforderlich, das Rotorblatt 5 regelmäßig zu inspizieren.

Falls ein Wartungsarbeiter während des Aufenthalts im Rotorblatt 5 plötzlich ernsthaft erkrankt oder durch einen Arbeitsunfall verletzt wird, kann dieser durch die Durchtrittsöffnungen 34 des Schotts 32 nur schwer oder gar nicht geborgen werden. Um trotzdem eine Bergung zu ermöglichen, ist in der Außenhaut 12 bzw. der Rotorblattschale 7 des Rotorblatts 5 eine verschließbare Ausstiegsöffnung 13 vorgesehen, durch welche eine betroffene Person aus dem Hohlraum 8 evakuiert und auf den Erdboden bzw. die Wasseroberfläche abgeseilt werden kann. Die Bergung einer Person ist am einfachsten, wenn die Ausstiegsrichtung gerade nach unten verläuft. Da bei Wartungsarbeiten die Rotorblätter 5 der Windenergieanlage 1 üblicherweise in eine Fahnenstellung gebracht werden, liegt die Ausstiegsrichtung bzw. die Ausstiegsöffnung 13 in diesem Ausführungsbeispiel auf der Saugseite 35 des Rotorblatts 5.

Die in Fig. 3 dargestellte Ausstiegsöffnung 13 ist mit einer Luke 16', die in gestrichelter Form von der Austrittsöffnung 13 weggeschwenkt dargestellt ist und mit durchgezogenen Linien in der Ausstiegsöffnung 13 liegend dargestellt ist, versehen. Die Luke 16' ist hier mit einem Scharnier angelenkt dargestellt.

Um auch durch einen Steg 37 zu gelangen, kann auch eine Durchstiegsöffnung 38 vorgesehen sein. Zur Wartungsarbeit können dann auch die Verbindungen der Stege mit entsprechenden Gurten bzw. der Rotorblattschale 7 zwischen zwei Stegen oder andere Hohlräume betreten werden.

Damit die aerodynamischen Eigenschaften des Rotorblatts 5 durch die Ausstiegsöffnung 13 nicht beeinträchtigt werden, ist diese während des Betriebs der Windenergieanlage 1 durch eine bündig mit der Außenhaut 12 der Rotorblattschale 7 abschließende Luke 16, 16', 16" verschließbar, die nach außen öffnend oder nach innen öffnend sein kann.

In Figur 3 ist eine Variante eines erfindungsgemäßen Rotorblatts 5 in einem vergrößerten Ausbruch schematisch dargestellt. In dieser Variante ist eine nach innen öffnende Luke 16' vorgesehen, die einmal geschlossen und einmal in gestrichelten Linien geöffnet dargestellt ist. Im Inneren des Hohlraums 8 sind in der Nähe der Ausstiegsöffnung 13 Anschlagmittel 17 zur Befestigung einer persönlichen Schutzausrüstung 18 vorgesehen, mit welcher der Wartungsarbeiter 11 gegen Absturz gesichert ist. Die Anschlagmittel sind als Anschlagösen im Bereich der Ausstiegsöffnung 13 angeordnet, so dass an ihnen auch eine Leine zum Abseilen einer zu bergenden Person angeschlagen werden kann.

Bei geöffneter Luke 16 kann Wind in die Ausstiegsöffnung 13 eingreifen und ein den Pitch des Rotorblatts 5 verstellendes Drehmoment ausüben. Hierdurch besteht die theoretische Gefahr, dass sich der Pitch verstellt und der Rotor zu trudeln beginnt. Um dies zu verhindern, sind weitere, insbesondere verschließbare, Öffnungen 19 im Steg 37 vorgesehen. Diese Öffnungen können weiterhin dazu genutzt werden, bei Arbeiten im Inneren des Hohlraums 8 für ausreichende Durchlüftung zu sorgen.

Weitere Ausstiegsöffnungen 13 können auch dazu vorgesehen sein, Winddruck, der in eine Ausstiegsöffnung 13 gelangt, wieder nach außen abzuleiten.

Die Luke 16, 16', 16" wird in beiden Ausführungsvarianten von der Innenseite des Hohlraums 8 aus geöffnet, dazu kann ein nicht dargestellter gewöhnlicher Griffhebel mit Klinke vorgesehen sein. Um ein unbeabsichtigtes Öffnen der Luke 16, 16', 16" und eine damit einhergehende Absturzgefahr für auf der Luke 16, 16', 16" stehende Personen oder Gegenstände zu vermeiden, ist eine zusätzliche Sicherungseinrichtung vorgesehen. Eine mögliche Ausführung einer solchen Sicherungseinrichtung ist in Figur 4 schematisch dargestellt. Die Luke 16, die der Übersichtlichkeit halber ohne Griffhebel dargestellt ist, besteht aus einem Lukenkörper 22, in welchem in Kanälen mehrere Sperrriegel 23 verlaufen. Die in entriegelter Stellung dargestellten Sperrriegel sind über Gelenkhebel 24 mit einer Trittplatte 25 verbunden, welche im dargestellten Beispiel die gesamte Oberseite des Lukenkörpers 22 überdeckt. Wird die Trittplatte 25 nun von oben durch darauf stehende Personen oder Gegenstände belastet, so werden die Gelenkhebel 24 nach unten und zur Seite hin gedrückt und schieben dabei die Sperrriegel 23 in Ausnehmungen 26 in der Außenhaut 12 des Rotorblatts 5. Dadurch wird ein Öffnen der Luke 16 sicher verhindert, bis die Belastung der Trittplatte beseitigt worden ist.

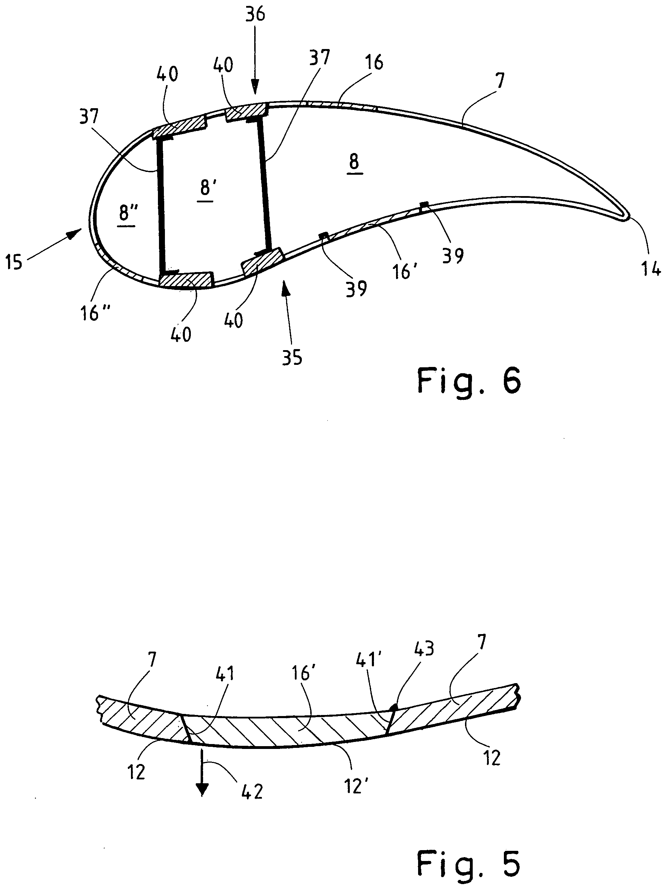

Eine weitere Sicherungseinrichtung bzw. eine Variante, bei der die Luke mit dem Bezugszeichen 16' davor bewahrt wird, ungewollt geöffnet zu werden, ist in Fig. 5 schematisch dargestellt. Hierbei ist eine Rotorblattschale 7 gezeigt, in die eine Luke 16' eingebracht ist. Diese ist an einem Scharnier 43 angelenkt und kann in den Hohlraum des Rotorblatts 5 verschwenkt werden. Um nun ein sicheres Verschließen und eine Herausfallsicherung in Schließrichtung 42 zu ermöglichen, ist in einem Randbereich 41, 41' die Luke sich verjüngend in Schließrichtung 42 ausgebildet. Es ergibt sich eine rampenartige bzw. angefaste Ausgestaltung, die formkomplementär zu der Öffnungskante der Rotorblattschale 7 ist. Beim Verschließen der Luke 16' kommen die Kontaktflächen der Rotorblattschale 7 der Luke 16' miteinander in Kontakt und verhindern ein Weiterbewegen der Luke 16' in Schließrichtung 42.

In Fig. 6 ist eine schematische Schnittdarstellung durch ein erfindungsgemäßes Rotorblatt 5 dargestellt. Das Rotorblatt 5 weist eine Rotorblattschale 7 auf, in die vier Gurte 40 eingebracht sind. Die Gurte 40 sind, und zwar jeweils zwei Gurte, mit jeweils einem Steg 37 verbunden. Durch beide Stege 37 bilden sich drei Hohlräume bzw. Teilhohlräume 8, 8', 8". Es können Durchtrittsöffnungen in den Stegen 37, die nicht dargestellt sind, vorgesehen sein. Es sind in diesem Ausführungsbeispiel auf der Saugseite 35 zwei Luken 16' und 16" zur Ermöglichung einer jeweiligen Ausstiegsöffnung vorgesehen und auf der Druckseite eine Luke 16. Die Luke 16" ist näher zum Nasenbereich des Rotorblatts 5 vorgesehen und die Luken 16' sowie 16 sind mehr im Bereich zu der Rotorblatthinterkante 14 vorgesehen. Als ein Ausführungsbeispiel ist um die Luke 16' am Randbereich zur sich bildenden Ausstiegsöffnung 13 der Rotorblattschale 7 ein Verstärkungsrahmen 39 schematisch dargestellt, der dazu vorgesehen ist, die durch die Luke bzw. durch die gebildete Ausstiegsöffnung sich ergebende Schwächung der Rotorblattschale 7 wieder aufzuheben.

Die Erfindung wird durch eine Auslegung der Blattstruktur gelöst, mit der eine oder mehrere Mannöffnungen bzw. Ausstiegsöffnungen in einem begehbaren Bereich des Rotorblatts ermöglicht werden. Es können Öffnungen in der Druck- und Saugseite vorgesehen sein, um ein Verdrehen des Rotorblatts im Ernstfall vermeiden zu können. Ein Verschließen der Öffnungen bzw. Ausstiegsöffnungen mit Schnellverschlüssen oder ähnlichem, beispielsweise mit Deckeln oder Luken, die sich in die Profilkontur des Rotorblatts bzw. der Rotorblattschale schmiegen, sind bevorzugt.

Es sind ferner Anschlagpunkte für Abseilgeräte und Sicherungen, wie beispielsweise der persönlichen Schutzausrüstung von Rettern und Verletzten, im Bereich der Zugangsöffnungen vorzusehen. Vorzugsweise wird die Luke bzw. Klappe nach innen geöffnet. Das Außenlaminat der Rotorblattschale kann so verstärkt sein, dass die Klappe darauf liegen kann und auf der Innenseite verriegelt werden kann. Hierdurch wird der Rettungsweg bei Arbeiten im Rotorblatt und ggf. auch in der Nabe erleichtert bzw. erst ermöglicht. Zur besseren Sauerstoffversorgung können auch entsprechend die Klappen bzw. die Luken geöffnet werden. Die Luke bzw. Klappe schmiegt sich bevorzugt exakt an die Profilkontur des Rotorblatts an, so dass keine Störung der Aerodynamik der Rotorblätter zu erwarten ist.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Windenergieanlage
- 2: Turm
- 3: Gondel
- 4: Nabe
- 5: Rotorblatt
- 6: Rotorblattwurzel
- 7: Rotorblattschale
- 8: Hohlraum
- 8', 8": Hohlraum
- 11: Wartungsarbeiter
- 12, 12': Außenhaut
- 13: Ausstiegsöffnung
- 14: Hinterkante
- 15: Nase
- 16, 16', 16": Luke
- 17, 17': Anschlagmittel
- 18: Persönliche Schutzausrüstung
- 19: Öffnung
- 22: Lukenkörper
- 23: Sperrriegel
- 24: Gelenkhebel
- 25: Trittplatte
- 30: Rotorblatttiefe
- 31: Drehachse
- 32: Schott
- 34, 34': Durchstiegsöffnung
- 35: Saugseite
- 36: Druckseite
- 37: Steg
- 38: Durchstiegsöffnung
- 39: Verstärkungsrahmen
- 40: Gurt
- 41: Randbereich
- 42: Schließrichtung
- 43: Scharnier
- 45: Rotorblattspitze

## Patentansprüche

1. Rotorblatt (5) einer Windenergieanlage (1) mit einer Rotorblattschale (7) und einer Blattwurzel (6) zur Befestigung des Rotorblatts (5) an einer Nabe (4) der Windenergieanlage (1), wobei das Rotorblatt (5) wenigstens einen Hohlraum (8) aufweist, der zumindest abschnittsweise begehbar ist, **dadurch gekennzeichnet, dass** die Rotorblattschale (7) eine verschließbare Ausstiegsöffnung (13) aufweist, wobei der Hohlraum (8) in mehrere Teilräume (8, 8', 8") unterteilt ist, welche durch passierbare Durchstiegsöffnungen (38) verbunden sind.

2. Rotorblatt (5) nach Anspruch 1, **dadurch gekennzeichnet, dass** zum Verschließen der Ausstiegsöffnung (13) eine bündig mit der Außenhaut (12) der Rotorblattschale (7) abschließende Luke (16,16', 16") vorgesehen ist.

3. Rotorblatt (5) nach Anspruch 2, **dadurch gekennzeichnet, dass** die Luke (16') mit einer nach innen gerichteten Schwenkbewegung öffnend oder mit einer nach außen gerichteten Schwenkbewegung öffnend ausgeführt ist.

4. Rotorblatt nach Anspruch 2 oder 3, **dadurch gekennzeichnet, dass** wenigstens eine Sicherungseinrichtung (23, 24, 25, 26) gegen unbeabsichtigtes Öffnen der Luke (16, 16', 16") vorgesehen ist.

5. Rotorblatt nach Anspruch 4, wobei die Sicherungseinrichtung wenigstens einen Sperrriegel (23) umfasst.

6. Rotorblatt nach Anspruch 4 oder 5, **dadurch gekennzeichnet, dass** die Sicherungseinrichtung (23, 24, 25, 26) bei von Innen gegen die Luke (16) wirkender Last das Öffnen der Luke (16) verhindernd ausgeführt ist.

7. Rotorblatt (5) nach einem der Ansprüche 1 bis 6, **dadurch gekennzeichnet, dass** im Bereich der verschließbaren Ausstiegsöffnung (13) die Rotorblattschale (7) verstärkt ist und/oder ein die Rotorblattschale (7) verstärkendes Element (39) vorgesehen ist.

8. Rotorblatt (5) nach einem der Ansprüche 1 bis 7, **dadurch gekennzeichnet, dass** die Ausstiegsöffnung (13) in einem Bereich des Rotorblatts (5) angeordnet ist, der zwischen der maximalen Rotorblatttiefe (30) und der Rotorblattspitze (45) liegt.

9. Rotorblatt (5) nach einem der Ansprüche 1 bis 8, **dadurch gekennzeichnet, dass** wenigstens eine, insbesondere verschließbare, Öffnung (19, 38), insbesondere Durchstiegsöffnung (38) in wenigstens einem Steg (37) des Rotorblatts (5) vorgesehen ist.

10. Rotorblatt (5) nach einem der Ansprüche 2 bis 9, **dadurch gekennzeichnet, dass** ein Randbereich (41) der Luke (16') in Schließrichtung (42) der Luke (16') sich verjüngend ausgebildet ist.

11. Rotorblatt (5) nach einem der Ansprüche 2 bis 10, **dadurch gekennzeichnet, dass** die Außenkontur (12') der Luke (16') an die Kontur der Außenhaut (12) der Rotorblattschale (7) angepasst ist.

12. Rotorblatt nach einem der vorangehenden Ansprüche, **dadurch gekennzeichnet, dass** im Inneren des Hohlraums (8) Anschlagmittel (17) zum Befestigen einer persönlichen Schutzausrüstung (18) vorgesehen sind.

13. Rotorblatt nach Anspruch 12, wobei die Anschlagmittel (17) im Bereich der Ausstiegsöffnung (13) angeordnet sind.

14. Windenergieanlage mit einem Mast (2), einer Gondel (3), einer an der Gondel (3) angeordneten Nabe (4) sowie wenigstens einem an der Nabe (4) angeordneten Rotorblatt (5), **dadurch gekennzeichnet, dass** das wenigstens eine Rotorblatt (5) nach einem der Ansprüche 1 bis 13 ausgeführt ist.

## Claims

1. A rotor blade (5) of a wind turbine (1), having a rotor blade shell (7) and a blade root (6) for fixing the rotor blade (5) on a hub (4) of the wind turbine (1), wherein the rotor blade (5) has a cavity (8), at least some portions of which can be accessed, **characterized in that** the rotor blade shell (7) has a closable exit opening (13), wherein the cavity (8) is subdivided into a plurality of partial spaces (8, 8', 8") which are connected through passable access openings (38).

2. The rotor blade (5) according to claim 1, **characterized in that** for closing the exit opening (13) a hatch (16, 16', 16") is provided closing flush with the outer layer (12) of the rotor blade shell (7).

3. The rotor blade (5) according to claim 2, **characterized in that** the hatch (16') is designed opening with an inward directed pivot movement or an outward directed pivot movement.

4. The rotor blade according to claim 2 or 3, **characterized in that** at least one safety device (23, 24, 25, 26) is provided against unintentional opening of the hatch (16, 16', 16").

5. The rotor blade according to claim 4, wherein the safety device comprises at least one locking bar (23).

6. The rotor blade according to claim 4 or 5, **characterized in that** the safety device (23, 24, 25, 26) is designed preventing the opening of the hatch (16) in the case of a load acting from the inside against the hatch (16).

7. The rotor blade (5) according to one of the claims 1 to 6, **characterized in that** in the region of the closable exit opening (13), the rotor blade shell (7) is reinforced and/or an element (39) is provided reinforcing the rotor blade shell (7).

8. The rotor blade (5) according to one of the claims 1 to 7, **characterized in that** the exit opening (13) is disposed in a region of the rotor blade (5) that lies between the maximum rotor blade depth (30) and the rotor blade tip (45).

9. The rotor blade (5) according to one of the claims 1 to 8, **characterized in that** at least one, in particular closable, opening (19, 38), in particular access opening (38) is provided in at least one web (37) of the rotor blade (5).

10. The rotor blade (5) according to one of claims 2 to 9, **characterized in that** an edge region (41) of the hatch (16') is formed tapering in the direction of closure (42) of the hatch (16').

11. The rotor blade (5) according to one of claims 2 to 10, **characterized in that** the outer contour (12') of the hatch (16') is matched to the contour of the outer layer (12) of the rotor blade shell (7).

12. The rotor blade according to one of the preceding claims, **characterized in that** slinging means (17) are provided in the interior of the cavity (8) for fixing a personal safety equipment (18).

13. The rotor blade according to claim 12, wherein slinging means (17) are disposed in the region of the exit opening (13).

14. A wind turbine having a mast (2), a nacelle (3), a hub (4) disposed on the nacelle (3) and at least one rotor blade (5) disposed on the hub (4), **characterized in that** the at least one rotor blade (5) is designed according to one of the claims 1 to 13.

## Revendications

1. Pale de rotor (5) d'une éolienne (1) avec une enveloppe (7) de pale de rotor et une racine de pale (6) pour fixer la pale de rotor (5) à un moyeu (4) de l' éolienne (1), dans laquelle la pale de rotor (5) présente une cavité (8), qui est au moins partiellement accessible, **caractérisé en ce que** l'enveloppe (7) de pale de rotor présente une ouverture de sortie (13) apte à être obturée, ladite cavité (8) étant divisée en une pluralité d'espaces (8, 8', 8"), qui sont reliés par des ouvertures d'accès infranchissables (38).

2. Pale de rotor (5) selon la revendication 1, **caractérisé en ce que** pour fermer l'ouverture de sortie (13), il est prévu une trappe de fermeture (16, 16', 16") en affleurement avec la peau extérieure (12) de l'enveloppe de la pale de rotor (7).

3. Pale de rotor (5) selon la revendication 2, **caractérisé en ce que** la trappe (16') s'ouvre par un mouvement de pivotement dirigé vers l'intérieur ou s'ouvre par l'exécution d'un mouvement de pivotement dirigé vers l'extérieur.

4. Pale de rotor selon la revendication 2 ou la revendication 3, **caractérisé en ce qu'**au moins un dispositif de fixation (23, 24, 25, 26) est prévu pour empêcher toute ouverture intempestive de la trappe (16, 16', 16").

5. Pale de rotor selon la revendication 4, dans lequel le dispositif de fixation comprend au moins une barre de verrouillage (23).

6. Pale de rotor selon la revendication 4 ou la revendication 5, **caractérisé en ce que** le dispositif de fixation (23, 24, 25, 26) est conçu de façon à empêcher l'ouverture de la trappe (16) en cas de charge agissant contre l'intérieur de la trappe (16).

7. Pale de rotor (5) selon l'une des revendications 1 à 6, **caractérisé en ce que** dans la zone de l'ouverture de sortie (13) apte à être obturée, l'enveloppe (7) de pale de rotor est renforcée et / ou un élément (39) de renfort d'enveloppe de pale de rotor (7) est prévu.

8. Pale de rotor (5) selon l'une des revendications 1 à 7, **caractérisé en ce que** l'ouverture de sortie (13) est située dans une zone de la pale de rotor (5) située entre la profondeur maximale (30) de la pale de rotor et la pointe (45) de la pale de rotor.

9. Pale de rotor (5) selon l'une des revendications 1 à 8, **caractérisé en ce qu'**au moins une ouverture (19, 38), en particulier apte à être obturée, en particulier l'ouverture d'accès (38), est aménagée dans au moins une bande (37) de la pale de rotor (5).

10. Pale de rotor (5) selon l'une quelconque des revendications 2 à 9, **caractérisé en ce qu'**une zone de bord (41) de la trappe (16') est formée de façon à aller en se réduisant en section dans le sens (42) de la fermeture de la trappe (16').

11. Pale de rotor (5) selon l'une des revendications 2 à 10, **caractérisé en ce que** le contour extérieur (12') de la trappe (16') est adapté au contour de la peau extérieure (12) de l'enveloppe (7) de pale de rotor.

12. Pale de rotor selon l'une quelconque des revendications précédentes, **caractérisé en ce qu'**à l'intérieur de la cavité (8), des moyens d'amarrage (17) sont prévus pour la fixation d'un équipement de protection individuelle (18).

13. Pale de rotor selon la revendication 12, dans lequel les moyens d'amarrage (17) sont aménagés dans la zone de l'ouverture de sortie (13).

14. Éolienne avec un mât (2), une nacelle (3), un moyeu (4) agencé sur la nacelle (3) et au moins une pale de rotor (5) disposée sur le moyeu (4), **caractérisé en ce qu'**au moins une pale de rotor (5) est réalisée selon l'une des revendications 1 à 13.
